# EUROPÄISCHE PATENTSCHRIFT

(11) **EP 2 266 409 B1**
(45) Veröffentlichungstag und Bekanntmachung des Hinweises auf die Patenterteilung: **17.08.2011**
(21) Anmeldenummer: 09008276.9
(22) Anmeldetag: 24.06.2009
(51) Int. Cl.: A22C 11/02

(54) **Vorrichtung zum Füllen von Därmen**
Device for filling casings
Dispositif destiné à remplir des boyaux de saucisses

(43) Veröffentlichungstag der Anmeldung: 29.12.2010
(73) Patentinhaber: Albert Handtmann Maschinenfabrik GmbH & Co. KG, 88400 Biberach (DE)
(72) Erfinder: Baechtle, Manfred, 88433 Schemmerhofen (DE); Rechsteiner, Juergen, 88436 Eberhardzell (DE); Restle, Christian, 88447 Birkenhard (DE); Hammerer, Michael, 88471 Laupheim (DE)
(74) Vertreter: Grünecker, Kinkeldey, Stockmair & Schwanhäusser Anwaltssozietät

(56) Entgegenhaltungen:
- WO-A-90/03114
- US-A- 4 142 273
- US-A- 4 438 545
- US-A- 4 893 377

## Beschreibung

Die Erfindung betrifft eine Vorrichtung der im Oberbegriff des Patentanspruchs 1 angegebenen Art.

Bei der Wurstherstellung, vor allem bei der Verarbeitung von Naturdärmen, ist die zum Auffädeln oder Aufziehen der Därme auf ein Füllrohr erforderliche Zeit ein den Ausstoß erheblich reduzierender Faktor. Deshalb ist es bekannt (US 4 091 505 A und DE 10 2007 025 583 A), einen Abdrehkopf mit mehreren Füllrohren zu verwenden, so dass mit einem Füllrohr weiterhin ein Darm gefüllt werden kann, während auf ein anderes Füllrohr ein neuer Darm aufgezogen wird. Zumindest das in der Füllstellung positionierte Füllrohr und gegebenenfalls auch die Darmbremse können, u.a. zum Portionieren, drehantreibbar sein. Bei den bekannten Vorrichtungen wird zum Darmwechsel die Darmbremse vom Füllrohrende wegbewegt, was bedingt, dass in diesem Bereich ein entsprechender Freiraum vorgesehen sein muss, in welchem an sich zum Abtransport vorgesehene Ketten oder Bänder oder dgl. entfernt oder verlagert werden müssen. Dies ist nachteilig und zeitaufwändig, da u.a. auch abgewartet werden muss, bis sich noch in den Bändern oder Ketten befindliche Portionen abtransportiert sind. Der Füllvorgang wird nur vorübergehend zum Verdrehen des neuen Füllrohrs in die Füllposition und des benutzten Füllrohrs in die Aufziehstellung unterbrochen. Die Füllposition wird dann umgehend wieder hergestellt, während der neue Darm aufgezogen und/oder das benutzte Füllrohr gewechselt wird. Dadurch arbeitet die Vorrichtung mit positiver Leistungsbilanz.

Ferner ist aus der Praxis eine solche Vorrichtung bekannt (Vemag LPG 208, Homepage der Firma Vemag), bei der beim Darmwechsel die Darmbremse ortsfest bleibt, hingegen der Abdrehkopf in Richtung zur Füllmaschine verstellt wird. Das sich in der Füllstellung befindliche Füllrohr wird linear aus der Darmbremse herausbewegt und dann durch Drehen des Abdrehkopfes in eine Aufziehposition geschwenkt. Anschließend wird der Abdrehkopf wieder nach vorne in Richtung zur Darmbremse verstellt. Es werden zumindest zwei mechanisch aufwändige, weil teleskopierbare Linearführungen benötigt, sowie ein zusätzliches Versorgungsteleskop zwischen der Darmbremse und einem den Abdrehkopf umgebenden Gehäuse. Diese Komponenten erhöhen den Wartungs- und Reinigungsaufwand und erhöhen das Gesamtgewicht der Vorrichtung.

Bei der aus US-4 142 273 A bekannten Vorrichtung einer Wurstmaschine weist der Abdrehkopf vier in Umfangsrichtung verteilte, an eine gemeinsame Zufuhr anschließbare Tüllen auf. Der Abdrehkopf ist an der Tragkonsole verschiebbar und verdrehbar montiert. Außerhalb des Drehbereiches des Abdrehkopfes ist mit der Tragkonsole über eine zur Achse des Abdrehkopfes exzentrische Rahmenkonstruktion ein stationärer Clippermechanismus verbunden.

Weiterer Stand der Technik ist enthalten in WO 90/03114 A, US 4 893 377 A und US 4 438 545 A.

Der Erfindung liegt die Aufgabe zugrunde, eine Vorrichtung der letztgenannten Art anzugeben, die baulich einfacher gestaltet ist, und bei der großräumig unbehinderter Zugang und freier Sichtbereich sowohl zum in der Füllstellung positionierten Füllrohr als auch zum in der Auffädelstellung positionierten Füllrohr gegeben sind.

Die gestellte Aufgabe wird erfindungsgemäß mit den Merkmalen des Patentanspruchs 1 gelöst.

Es wird für den gegebenenfalls freistehend platzierten Abdrehkopf nur die eine starre Achse eingesetzt, die die Vorrichtung baulich vereinfacht und dennoch mehrere Anforderungen erfüllt. Die Achse stellt eine stabile Verbindung zwischen der Darmbremse und der Tragkonsole her, bildet die Drehachse des Abdrehkopfes, führt den Abdrehkopf bei dessen axialen Verschiebebewegungen und Drehbewegungen, und stabilisiert den Abdrehkopf beim Füllvorgang und Darmwechselvorgang. Zusätzlich ist der Antriebsstrang abgeschirmt und platzsparend in der Achse untergebracht. Von einer Bedienseite der Vorrichtung sind großräumig freier Zugriff und unbehinderter Sichtbereich zu den Füllrohren und zur Darmbremse gegeben.

Bei einer zweckmäßigen Ausführungsform wird der Antriebsstrang zumindest zum Drehen des in der Füllstellung befindlichen Füllrohres in der Achse entweder von der Seite der Darmbremse oder von der Seite der Tragkonsole angetrieben, abhängig davon, wo in der Vorrichtung besser Zugang zum Antreiben des Antriebsstranges gegeben ist. Der Antriebsstrang kann jedoch, vorzugsweise, auch zum Antreiben der Darmbremse und/oder zum Verdrehen des Abdrehkopfes eingesetzt werden, und übernimmt dann eine Mehrfachfunktion.

Bei einer baulich einfachen Ausführungsform sind der Stützabschnitt und der Führungsabschnitt zueinander koaxial. Dennoch sind der Zugang und der Sichtbereich kaum beschränkt.

Bei einer anderen Ausführungsform weist die Achse zwischen dem Stützabschnitt und dem Führungsabschnitt eine Kröpfung auf, wobei der Stützabschnitt gegenüber dem Führungsabschnitt, vorzugsweise, im Wesentlichen in Richtung zur Darmbremse versetzt platziert ist. Dank der Kröpfung liegt somit der Stützabschnitt seitlich versetzt zum in der Füllstellung positionierten Füllrohr, zu der Darmbremse und zum in der Aufziehstellung positionierten Füllrohr, was die Bedienbarkeit von einer Bedienseite der Vorrichtung verbessert.

Bei einer anderen Ausführungsform ist in, an oder bei einem die Darmbremse enthaltenden, mit dem Stützabschnitt verbundenen Gehäuse ein Antriebszug vorgesehen, ist zumindest der Stützabschnitt der Achse hohl ausgebildet, und ist der vom Antriebszug betätigbare Antriebsstrang im Stützabschnitt zum Abdrehkopf verlaufend angeordnet und dort zumindest mit dem in der Füllstellung positionierten Füllrohr gekuppelt oder kuppelbar, wobei, vorzugsweise die Darmbremse in dem stationären Gehäuse ebenfalls vom Antriebszug oder vom Antriebsstrang drehantreibbar ist. Hierbei wird der durch den Stützabschnitt beanspruchte Platz zwischen der Darmbremse und dem Abdrehkopf unter weiterer baulicher Vereinfachung zum Unterbringen des Antriebsstrangs genutzt, wobei der Stützabschnitt den Antriebsstrang gegen Verschmutzung abschirmt.

Die Darmbremse kann in dem die Darmbremse austauschbar enthaltenden Gehäuse direkt drehangetrieben werden. Zweckmäßig werden jedoch sowohl zumindest das in der Füllstellung befindliche Füllrohr als auch die Darmbremse vom gleichen Antriebszug oder vom Antriebsstrang drehangetrieben, was den Vorteil weniger und mehrere Aufgaben erfüllender Antriebskomponenten bietet.

Günstig ist es, wenn der Stützabschnitt und der Führungsabschnitt zueinander parallel sind, und der Stützabschnitt gegenüber einer gedachten Verlängerung der Abdrehkopf-Achse zur Seite der Darmbremse um ein Maß versetzt ist, das in etwa 15 % bis 25 % des Außendurchmessers des Abdrehkopfes beträgt, bzw. etwas weniger als den Abstand jedes Füllrohrs von der Abdrehkopf-Achse. Dadurch ist bequemer Zugriff zum in der Füllstellung befindlichen Füllrohr und der Darmbremse gegeben, und wird auch das in der Aufziehstellung befindliche Füllrohr exponiert für den Darmaufzug dargeboten, ohne dass die Achse stört. Der Führungsabschnitt, um den der Abdrehkopf drehbar ist, erstreckt sich nur innerhalb eines Bereiches, der zum Verschieben des Abdrehkopfes benötigt wird, und stört trotz seiner relativ zum Abdrehkopf zentralen Position weder beim Füllvorgang noch während eines Darmwechsels, da diese näher bei bzw. aus der Darmbremse ablaufen. Dabei sollte der Stützabschnitt innerhalb der Bewegungsbahnen der Füllrohre bei Verdrehen des Abdrehkopfes liegen, um Kollisionen, auch bei viel aufgezogenem Darmmaterial, zu vermeiden.

Zweckmäßig sind der Führungsabschnitt und der Stützabschnitt Rundrohre, wobei der Führungsabschnitt sogar ein massives Rundprofil sein könnte.

Bei einer zweckmäßigen Lösung zum Antreiben zumindest des in der Füllstellung positionierten Füllrohrs weist der Antriebsstrang zum Füllrohr eine durch Verschieben des Abdrehkopfes trennbare und einrückbare Kupplung auf. Wenn der Abdrehkopf von der Darmbremse weggeschoben wird, um ein neues Füllrohr in die Füllposition zu drehen, wird automatisch die Kupplung getrennt, wohingegen die passende Kupplung dann wieder eingerückt wird, wenn für den Füllvorgang ein Drehantrieb des Füllrohrs benötigt wird. Die trennbare Kupplung trägt ebenfalls erheblich zur baulichen Vereinfachung der Vorrichtung bei.

Bei einer konkreteren Ausführungsform weist der Antriebsstrang eine im Stützabschnitt gelagerte Antriebswelle auf, die an der Kröpfung aus dem Stützabschnitt austritt und mit einem Austrittsende auf eine im Abdrehkopf angeordnete Drehkupplung ausrichtbar ist. Das Austrittsende wird durch die Drehung des Abdrehkopfes auf die Drehkupplung ausgerichtet, und durch Verschieben des Abdrehkopfes in Eingriff gebracht oder aus dem Eingriff gelöst. Zweckmäßig ist die Drehkupplung eine Bogenrillenkupplung, und ist das Austrittsende der Antriebswelle passend zur Bogenrillenkupplung gestaltet.

Da in der Vorrichtung unterschiedliche Füllmodi möglich sind, für die der Abdrehkopf unterschiedliche Positionen einzunehmen hat, z.B. eine normale Füllposition oder eine Verdrängungs-Füllposition, ist bei einer zweckmäßigen Ausführungsform das Austrittsende der Antriebswelle an der Antriebswelle axial verstellbar und in unterschiedlichen Verstellpositionen im Stützabschnitt festlegbar. Hierfür kann am Stützabschnitt eine Verstellvorrichtung mit einer Verstellhandhabe zum axialen Verstellen des Austrittsendes der Antriebswelle, z.B. in einer Art Keilwellenanordnung, vorgesehen sein. Damit ist eine Anpassung des Antriebsstranges an den jeweiligen Füllmodus bequem möglich.

Bei einer anderen Ausführungsform kann die Kupplung im Abdrehkopf zwischen dem im Abdrehkopf relativ verschiebbaren Austrittsende der Antriebswelle, die dort ein Zahnrad tragen kann, und dem jeweiligen, im Abdrehkopf innen angeordneten Füllrohr-Drehlager vorgesehen sein. In diesem Fall reicht eine einzige, beispielsweise im Führungsabschnitt ortsfest positionierte Kupplungshülse aus, die mit dem Austrittsende der Antriebswelle in Antriebsverbindung steht, und zu der bei einer Verdrehung des Abdrehkopfes das jeweilige Füllrohr-Drehlager hingedreht wird.

Bei einer zweckmäßigen Ausführungsform ist ein einfaches Antriebskonzept dadurch geschaffen, dass im Antriebszug eine Ausgangswelle in das Gehäuse führt, in welchem die Darmbremse austauschbar und drehbar gelagert ist, wobei die Ausgangswelle beispielsweise über einen Riementrieb mit der Darmbremse und dem Antriebsstrang gekuppelt oder kuppelbar sein kann.

Zweckmäßig ist die Kröpfung der Achse so platziert, dass sie in etwa den maximalen Verschiebehub des Abdrehkopfes weg von der Tragkonsole begrenzt.

In der Vorrichtung sind zweckmäßig das Gehäuse und die Tragkonsole stationär auf einem Unterbau angeordnet, in welchem Steuer- und/oder Antriebssysteme untergebracht sein können, wobei der Unterbau entweder zur zugeordneten Füllmaschine hin bewegbar und andockbar ist, oder die Füllmaschine und der Unterbau auf andere Weise vereinigt werden.

Bei einer weiteren Ausführungsform wird der Abdrehkopf mittels eines Servoantriebs, vorzugsweise über wenigstens eine Schraubspindel, achsparallel auf dem Führungsabschnitt der Achse verschoben.

Die Schraubspindel, vorzugsweise ein Paar Schraubspindeln, kann versetzt zum Führungsabschnitt zwischen der Tragkonsole und dem Abdrehkopf angeordnet und mit dem Abdrehkopf um den Führungsabschnitt drehbar sein. Servoantriebe zum Verschieben und/oder Verdrehen des Abdrehkopfes könnten entweder im Bereich der Tragkonsole oder im Unterbau angeordnet sein.

Die Schraubspindel kann bei einer anderen Ausführungsform auch direkt in den Führungsabschnitt der Achse eingebaut werden, um die Vorrichtung noch weiter zu vereinfachen. Dies ist vor allem dann zweckmäßig, wenn der Antriebsstrang in der Achse auch zur Verdrehung des Abdrehkopfes verwendet wird.

Bei einer besonders zweckmäßigen Ausführungsform wird der Abdrehkopf über eine durch Verschieben des Abdrehkopfes auf dem Führungsabschnitt zwischen einer Arbeitsposition und einer Verdrehposition trennbare und einrückbare, im Abdrehkopf angeordnete Kupplung mittels des Antriebsstranges um den Führungsabschnitt verdreht. Die Verdrehung des Abdrehkopfes, um ein anderes Füllrohr in der Füllposition zu positionieren, erfolgt in der Verdrehposition des Abdrehkopfes, in der die Kupplung zwischen dem Antriebsstrang und dem Füllrohr-Drehlager ausgerückt und nur die Kupplung zwischen dem Antriebsstrang und dem Abdrehkopf eingerückt ist. In der Arbeitsposition ist hingegen die Kupplung zwischen dem Antriebsstrang und dem Füllrohr-Drehlager eingerückt, während dann die andere Kupplung zwischen dem Antriebsstrang und dem Abdrehkopf ausgerückt ist.

Bei einer weiteren Ausführungsform ist zwischen der Tragkonsole und dem Abdrehkopf ein mit der Zufuhr verbundenes, zur Abdrehkopf-Achse paralleles und in der Tragkonsole verschiebbares Zuführrohr vorgesehen, das über eine am Abdrehkopf vorgesehene Drehverbindung an das in der Füllstellung positionierte Füllrohr anschließbar ist. Die Anordnung des Zuführrohres behindert die Verschiebebewegungen des Abdrehkopfes nicht. Die Drehverbindung ermöglicht eine einfache Füllverbindung zwischen der Zufuhr und dem Füllrohr über das Zuführrohr. Diese Drehverbindung kann ähnlich einem Gleitring gestaltet sein. Der Abdrehkopf dreht sich relativ zum Zuführrohr und der Drehverbindung.

Anhand der Zeichnungen werden Ausführungsformen des Erfindungsgegenstandes erläutert. Es zeigen:
- Fig. 1: eine Perspektivansicht in Blickrichtung von einer Bedienseite einer Vorrich- tung zum Füllen von Därmen, in einer Arbeitsposition,
- Fig. 2: eine Ansicht ähnlich der von Fig. 1, in einer Verdrehposition zum wahlweisen Positionieren von zum Füllen vorgesehenen Füllrohren,
- Fig. 3: eine Axialansicht der Vorrichtung in Blickrichtung auf das vordere Ende,
- Fig. 4: eine Perspektivansicht der Vorrichtung, in einer Arbeitsposition, und in Blick- richtung von der der Bedienseite abgewandten Seite, und
- Fig. 5 und 6: Längsschnitte einer weiteren Ausführungsform mit dem Abdrehkopf in einer Arbeitsposition und in einer Verdrehposition.

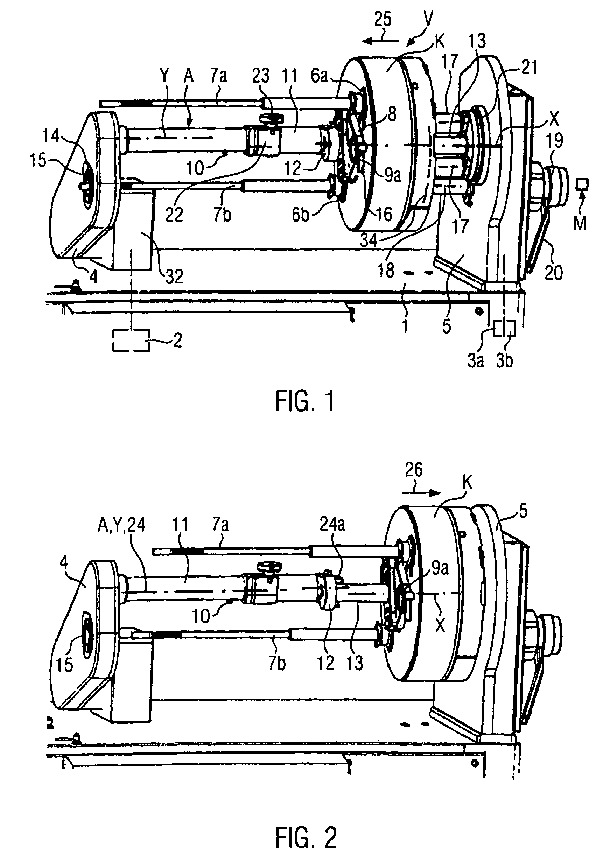

Eine in den Fig. 1 bis 4 nur mit Grundkomponenten gezeigte Vorrichtung V zum Füllen von Därmen, beispielsweise bei der Wurstherstellung, weist einen funktionell einer Füllmaschine M zugeordneten Unterbau 1 auf, in welchem beispielsweise Antriebssysteme 2, 3a, 3b für eine Darmbremse 15 und/oder zumindest ein Füllrohr 7a, 7b und/oder eine Verdrehung eines Abdrehkopfes K und/oder eine Axialverschiebung des Abdrehkopfes K untergebracht sein können.

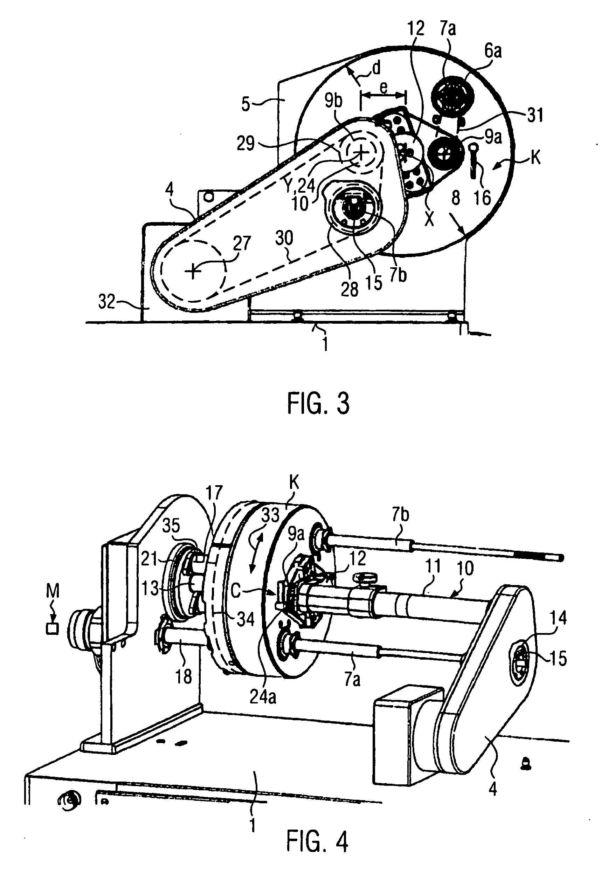

Auf dem Unterbau 1 ist stationär ein Gehäuse 4 mit einem kastenförmigen Fundament 32 festgelegt. In dem Gehäuse 4 ist in einer Öffnung 14 eine Darmbremse 15, zweckmäßig auswechselbar, gehaltert. Im Abstand von dem Gehäuse 4 befindet sich auf dem Unterbau 1 eine Tragkonsole 5. Das die Darmbremse 15 enthaltende Gehäuse 4 und die Tragkonsole 5 sind durch eine einzige starre Achse 10 fest miteinander verbunden, die eine Kröpfung 12 aufweist und durch die Kröpfung 12 in einen Stützabschnitt 11 und einen Führungsabschnitt 13 (z.B. Rundrohre) unterteilt wird. Der Stützabschnitt 11 ist mit dem Gehäuse 4 verbunden und endet im Wesentlichen an der Kröpfung 12. Der Führungsabschnitt 13 erstreckt sich von der Kröpfung 12 zur Tragkonsole 5 und ist dort festgelegt. Der Führungsabschnitt 13 definiert eine Drehachse X des Abdrehkopfes K und führt und stützt den Abdrehkopf K bei dessen Verschiebebewegungen zwischen beispielsweise der Füllposition in Fig. 1 und einer Zwischenposition in Fig. 2 näher bei der Tragkonsole 5. Das Gehäuse 4, die Tragkonsole 5, der Unterbau 1 und die Achse 10 bilden eine stabile Rahmenstruktur. Der Stützabschnitt 11 ist (Fig. 3) gegenüber der Abdrehkopf-Achse (X) horizontal mit einem Ausmaß (e) versetzt, das beispielsweise zwischen 15 % und 25 % des Außendurchmessers (d) des Abdrehkopfes (K) betragen kann bzw. etwas kürzer ist als der Radialabstand jeder von im gezeigten Ausführungsbeispiel zwei diametral gegenüberliegend am Abdrehkopf K angeordneten, zum Füllen und Halten eines aufgezogenen Darmabschnitts (nicht gezeigt) vorgesehenen Füllrohren 7a, 7b von der Abdrehkopf-Achse X. Der Stützabschnitt 11 definiert deshalb eine gegenüber der Abdrehkopf-Achse X seitlich versetzte Stützachse Y.

Am Abdrehkopf K sind frontseitig z.B. zwei diametral gegenüberliegende Füllrohr-Drehlager 6a, 6b angeordnet. In jedem Füllrohr-Drehlager 6a, 6b ist ein Füllrohr 7a, 7b austauschbar montiert. Ferner ist an der Frontseite des Abdrehkopfes K eine Platte 8 montiert, in welcher zwei bezüglich der Abdrehkopf-Achse X diametral gegenüberliegende Drehkupplungen 9a, 9b versetzt zu den Füllrohr-Drehlagern 6a, 6b angeordnet sind. Die Drehkupplungen 9a, 9b (Fig. 3) haben geringere, aber gleiche Radialabstände von der Abdrehkopf-Drehachse X als die Füllrohr-Drehlager 6a, 6b, und sind beispielsweise offene Bogenrillen-Drehkupplungen, die über eine in Fig. 3 angedeutete Antriebsverbindung 31 jeweils mit einem Füllrohr-Drehlager 6a, 6b verbunden sind.

Optional können an der Frontseite des Abdrehkopfes K (Revolver) Arretierungshebel 16 angebracht sein, die es ermöglichen, in bestimmten Betriebssituationen den Abdrehkopf K und/oder jedwede Antriebsverbindungen zu blockieren.

Zwischen dem Abdrehkopf K und der Tragkonsole 5 erstreckt sich mindestens ein seitlich versetzt zur Abdrehkopf-Achse X angeordnetes Rohr 17, zweckmäßig zwei symmetrisch angeordnete Rohre 17, in denen Schiebeverstelleinrichtungen, z.B. Schraubspindeln 35 (Fig. 4), enthalten sind, mit denen der Abdrehkopf K beispielsweise über den Servoantrieb 3b in Richtung der Pfeile 25 und 26 in den Fig. 1 und 2 verschiebbar ist. Die Rohre 17 sind an einem Drehkörper 21 angeordnet, der an der Tragkonsole 5 drehbar gelagert und beispielsweise mittels des Servoantriebs 3a in Richtung des Doppelpfeiles 33 (Fig. 4) mit dem Abdrehkopf K verdrehbar ist, um beispielsweise das eine Füllrohr 7a, 7b in die Drehposition entsprechend der Füllposition (Fig. 1 und 4) zu stellen, in der das freie Ende des Füllrohrs auf die Darmbremse 15 ausgerichtet ist, und gleichzeitig das andere Füllrohr in die Aufziehposition für einen Darmwechsel zu bringen. Mittels der zumindest einen Schraubspindel 35 können unterschiedliche Verschiebepositionen des Abdrehkopfes K für einen Füllvorgang abhängig vom jeweils gewählten Füllmodus eingestellt werden. Der Abdrehkopf K ist auf dem Führungsabschnitt 13 verschiebbar und drehbar gelagert.

An der dem Abdrehkopf K abgewandten Seite der Tragkonsole 5 ist eine Zufuhr 19 mit einem Bedienungshebel 20 angebracht, die mit der Füllmaschine M kuppelbar ist. Zwischen der Tragkonsole 5 und dem Abdrehkopf K ist ferner ein axial verschiebbares Zuführrohr 18 angeordnet, das über eine an der Rückseite des Abdrehkopfes K angeordnete, sich im Bogenmaß zumindest zwischen den beiden Füllrohren 7a, 7b erstreckende Drehdurchführung die Füllverbindung mit dem jeweils in der Füllposition befindlichen Füllrohr 7a, 7b herstellt.

Auf dem Stützabschnitt 11 ist, optional, eine Verstellvorrichtung 22 mit einer Verstellhandhabe 23 angeordnet, deren Zweck später erläutert wird.

Um beispielsweise das jeweils in der Füllposition befindliche Füllrohr 7a, 7b drehanzutreiben (z.B. zum Portionieren), ist im Stützabschnitt 11 ein entlang der Stützachse Y verlaufender Antriebsstrang A untergebracht, der eine im Stützabschnitt 11 drehgelagerten Antriebswelle 24 umfasst, die mit einem Austrittsende 24a im Bereich der Kröpfung 12 aus dem Stützabschnitt 11 vorsteht und mit der jeweiligen Drehkupplung 9a, 9b kuppelbar ist, sobald der Abdrehkopf K in Richtung des Pfeiles 25 in Fig. 1 in die Füllposition verschoben wird, in der das Füllrohr 7a, 7b mit seinem freien Ende in die Darmbremse 15 eingetreten ist. Das Austrittsende 24a passt in die jeweilige z.B. als Bogenrillenkupplung ausgebildete, Drehkupplung 9a und 9b.

Um unterschiedliche Verschiebepositionen entsprechend der jeweiligen Füllmodi der Vorrichtung V zu ermöglichen, kann, optional, das Austrittsende 24a der Antriebswelle 24 relativ zur Antriebswelle 24 axial verstellt werden, z.B. mittels der Verstellvorrichtung 22 und der Drehhandhabe 23. Beispielsweise wird für einen Füllmodus der Abdrehkopf K relativ zur Tragkonsole 5 nur über 85 mm verstellt, wofür das Austrittsende 24a weiter aus dem Stützabschnitt 11 vortreten muss, während für einen anderen Füllmodus der Abdrehkopf K über 100 mm verschoben wird, wofür das Austrittsende 24a entsprechend um 15 mm zurückgezogen wird, damit der Kupplungseingriff zwischen dem Austrittsende 24a und der Drehkupplung 9a bzw. 9b ordnungsgemäß hergestellt wird.

Bei einer nicht gezeigten Alternative könnte das Austrittsende 24a der Antriebswelle 24 auch in Austrittsrichtung federnd vorgespannt sein und vom Abdrehkopf K entsprechend dessen Verschiebehubs zurückgeschoben werden.

Die Umfangskontur des Gehäuses 4 ist so gewählt, dass sie gegenüber der Abdrehkopf-Achse etwas zurückgesetzt ist, und auch das freie Ende des in der Aufziehstellung zu einem Darmwechsel positionierten Füllrohrs (in Fig. 3) frei zugänglich exponiert ist.

Im Gehäuse 4 ist ein Antriebszug zum Antreiben der Darmbremse 15 und/oder des jeweils in der Füllposition platzierten Füllrohrs 7a, 7b enthalten. Eine Ausgangswelle 27 mündet in dem Gehäuse 4 und ist über eine Riemenscheibe oder ein Zahnrad und einem Riementrieb 30 (z.B. einem Zahnriemen) mit entsprechenden Antriebsrädern 28, 29 verbunden, die im Gehäuse 4 gelagert sind. Das Antriebsrad 28 dient zum Antreiben der Darmbremse 15, während das Antriebsrad 29 zum Antreiben der Antriebswelle 24 im Stützabschnitt 11 dient.

Die Drehbewegung des Antriebsrades 29 wird dadurch über die Antriebswelle 24 auf das in der Füllposition befindliche Füllrohr 7b (Fig. 3) übertragen, dass das Austrittsende 24a (Fig. 4) der Antriebswelle 24 in die Drehkupplung 9b (Fig. 3) eingreift, die die Drehbewegung über die Antriebsverbindung 31 zum Füllrohr-Drehlager 6b und auf das Füllrohr 7b überträgt.

Anstelle der zumindest einen Schraubspindel 35 (Fig. 4) könnte auch ein anderer Antrieb oder Aktuator verwendet werden. Auch der Drehantrieb des Abdrehkopfes K kann anders gestaltet sein und beispielsweise über den Antriebsstrang A betätigt werden. Anstelle des Zuführrohres 18 könnte ein flexibler Schlauch installiert sein. Die Füllrohre 7a, 7b sind am Abdrehkopf K auswechselbar montiert und können gegen andere mit anderen Füllquerschnitten ersetzt werden. Auch die Darmbremse 15 könnte gegen eine andere, zu einem anderen Füllquerschnitt passende Darmbremse getauscht werden. Das Austrittsende 24a der Antriebswelle 24 ist zweckmäßig durch eine entsprechende Dichtung gesichert, um bei Reinigungszyklen kein Reinigungsmittel ins Innere des Stützabschnittes 11 eintreten zu lassen. Schließlich wäre es denkbar, am Abdrehkopf K mehr als zwei Füllrohre anzuordnen.

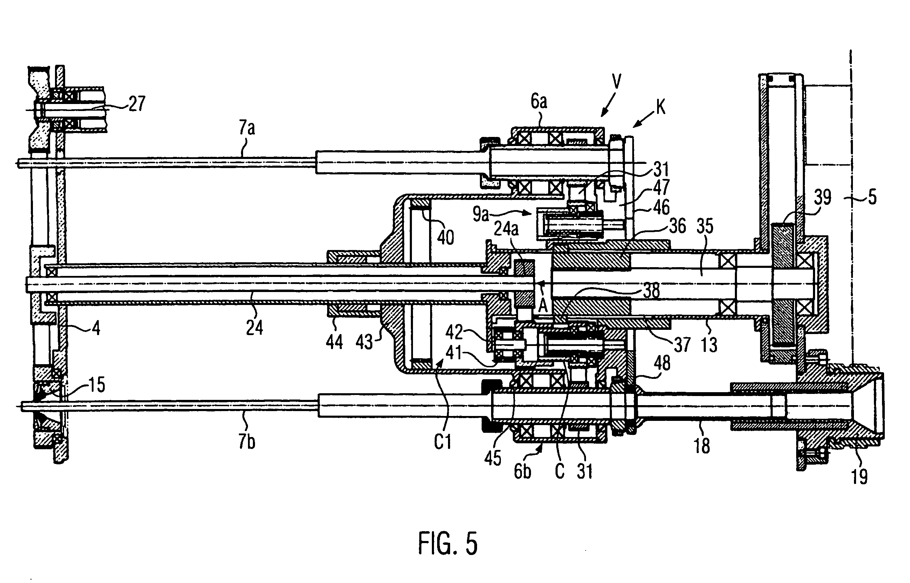

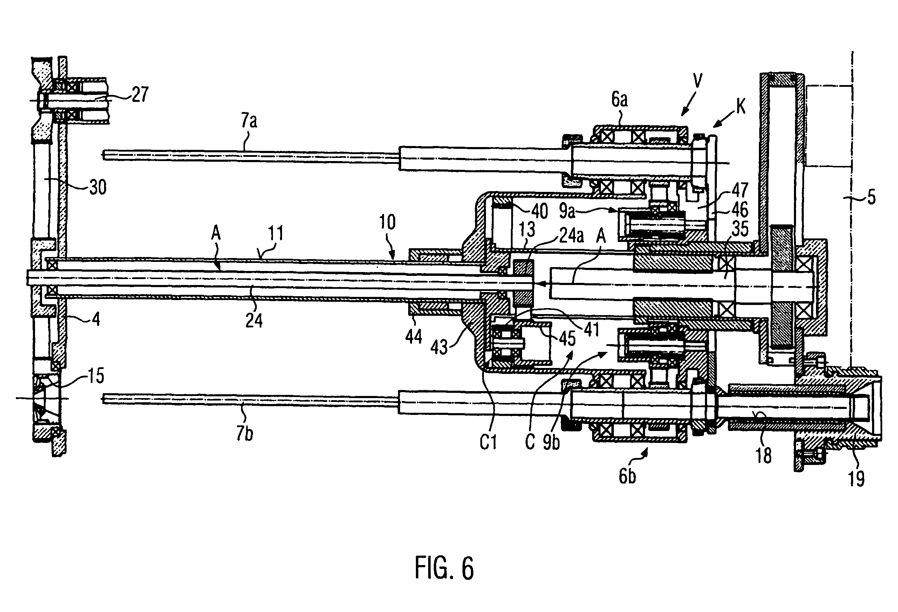

Die in den Fig. 5 und 6 gezeigte, andere Ausführungsform der Vorrichtung V (Fig. 5 mit in einer Arbeitsposition gezeigtem Abdrehkopf K; Fig. 6 mit in einer Verdrehposition gezeigtem Abdrehkopf K) unterscheidet sich von der Ausführungsform der Fig. 1 bis 4 unter anderem hauptsächlich dadurch, dass die einzige starre Achse 10 zueinander koaxiale Stütz- und Führungsabschnitte 11, 13 aufweist, und der Antriebsstrang A durch den Stützabschnitt 11 bis in den Führungsabschnitt 13 reicht und wahlweise zum Drehantreiben des in der Füllposition positionierten Füllrohres 7a oder 7b und zum Verdrehen des Abdrehkopfes K eingesetzt wird. Ferner ist die Schraubspindel 35 zentral im Führungsabschnitt 13 untergebracht, mit der der Abdrehkopf K beispielsweise zwischen den in Fig. 5 und 6 gezeigten Arbeits- und Verdrehpositionen auf dem Führungsabschnitt 13 verschiebbar ist.

Der Stützabschnitt 11 und der Führungsabschnitt 13 sind hohle Rundrohre, wobei der Durchmesser des Führungsabschnittes 13 größer sein kann als der Durchmesser des Stützabschnittes 11, und im Inneren eines Glockenkörpers 43 des Abdrehkopfes K fest miteinander verbunden. Das Austrittsende 24a der Antriebswelle 24 trägt ein Zahnrad, das z.B. über einen Zahnriemen mit einer Kupplungshülse 45 als Teil einer weiteren Kupplung C1 und der Kupplung C in Antriebsverbindung steht. Die Kupplungshülse 45 ist bei 42 ortsfest im Führungsabschnitt 13 positioniert und somit auf die hier im Abdrehkopf K gelagerte Drehkupplung 9a oder 9b des jeweils in der Füllposition positionierten Füllrohres 7a oder 7b axial ausgerichtet. Im Glockenkörper 43 ist eine innere Ringverzahnung 40 angeordnet, die zur Zusammenarbeit mit einer Außenverzahnung 41 der Kupplungshülse 45 bestimmt ist. In der Arbeitsposition des Abdrehkopfes K in Fig. 5 ist die Kupplung C1 ausgerückt, da der Glockenkörper 43 in Richtung zur Darmbremse 15 verschoben ist. Dann ist die Kupplung C zwischen der Kupplungshülse 45 und der Drehkupplung 9a oder 9b eingerückt, um das Füllrohr 7a oder 7b antreiben zu können.

Hingegen ist in der in Fig. 6 gezeigten Verdrehposition des Abdrehkopfes K der Abdrehkopf mit seinem Glockenkörper 43 in Richtung zur Tragkonsole 5 verschoben, so dass die Kupplungshülse 45 von der Drehkupplung 9a oder 9b gelöst und über die Außenverzahnung 41 mit der inneren Ringverzahnung 40 in Eingriff ist, um bei Drehung der Antriebswelle 24 den Abdrehkopf K zu verdrehen und ein Füllrohr 7a oder 7b in die Füllposition zu bringen.

Der Glockenkörper 43 wird auf dem Stützabschnitt 11 verschoben und trägt frontseitig eine Gleitdichtung 44. Die Antriebswelle 24 wird, wie in der Ausführungsform der Fig. 1 bis 4, über die Eingangswelle 27 und den Riementrieb 30 im Gehäuse 4 der Darmbremse 5 zusammen mit dieser angetrieben.

Bei einer alternativen Ausführungsform, die im Detail nicht gezeigt ist, erstreckt sich der Antriebsstrang A (Fig. 5) von der Seite der Tragkonsole 5 durch den Führungsabschnitt 13 zumindest bis zu dem Austrittsende 24a (einem Zahnrad), um das jeweilige Füllrohr 7a oder 7b und wahlweise den Abdrehkopf K zu verdrehen. Der von der Seite der Tragkonsole 5 kommende Antriebsstrang A könnte sogar durch den Stützabschnitt 11 bis in das Gehäuse 4 geführt sein, um auch die Darmbremse 15 anzutreiben. Alternativ könnte die Darmbremse 15 von einem eigenen Antrieb im Gehäuse 4 her angetrieben werden, so dass der Antriebsstrang A im Führungsabschnitt 13 mit dem Austrittsende 24a bzw. dem Zahnrad in Fig. 5, 6 endet.

Die Verschiebebewegung des Abdrehkopfes K wird in den Fig. 5 und 6 durch die hier im Inneren des Führungsabschnittes 13 untergebrachte Schraubspindel 35 bewirkt. Die Schraubspindel wird an der Seite der Tragkonsole 5 über ein Zahnrad 39 von einem nicht näher hervorgehobenen Servoantrieb angetrieben und trägt eine Mutter 36, die auf der Schraubspindel 35 verschraubbar ist und mit Fortsätzen 38 in Längsschlitze 37 des Führungsabschnittes 13 längsverschiebbar aber undrehbar eingreift. Die Fortsätze 38 wirken als Mitnehmer in einem Tragkörper 47 des Abdrehkopfes. An dem Tragkörper 47 sind die Füllrohr-Drehlager 6a, 6b gelagert, und an diesen auch der Glockenkörper 43.

An der Hinterseite des Tragkörpers 47 ist eine kreisringförmige Drehdurchführung 46 relativ zum Tragkörper 47 verdrehbar angeordnet, die einen Durchgang 48 aufweist, in welchen das Zuführrohr 18 eingesteckt ist, das in der Zufuhr 19 axial verschieblich gehalten wird und die Füllverbindung von der Zufuhr 19 zum in der Füllposition positionierten Füllrohr 7a oder 7b herstellt. Das Zuführrohr 18 macht Verschiebebewegungen des Abdrehkopfes K mit.

## Patentansprüche

1. Vorrichtung (V) zum Füllen von Därmen, mit einem mindestens zwei in Umfangsrichtung versetzte Tüllen (7a, 7b) aufweisenden Abdrehkopf (K), der an wenigstens eine Zufuhr (19) anschließbar und verschiebbar und um eine Achse (X) drehbar an einer Tragkonsole (5) angeordnet ist, und einer stationären und axial auf ein in einer Füllstellung positioniertes Füllrohr (7a, 7b) ausgerichteten Darmbremse (15), wobei zumindest das in der Füllstellung positionierte Füllrohr (7a, 7b) im Abdrehkopf (K) drehantreibbar ist, **dadurch gekennzeichnet, dass** die Darmbremse (15) und die Tragkonsole (5) über eine starre Achse (10) verbunden sind, die einen zur Darmbremse (15) verlaufenden Stützabschnitt (11) und einen in der Abdrehkopf-Achse (X) zentral durch den Abdrehkopf (K) verlaufenden Führungsabschnitt (13) aufweist, und dass in der Achse (10) ein Antriebsstrang (A) angeordnet ist, wobei zwischen Darmbremse (15) und Abdrehkopf (K) die Achse (10) die einzige Verbindung darstellt.

2. Vorrichtung nach Anspruch 1, **dadurch gekennzeichnet, dass** der Antriebsstrang (A) in der Achse (10) entweder von der Seite der Darmbremse (15) oder von der Seite der Tragkonsole (5) oder von beiden Seiten antreibbar ist.

3. Vorrichtung nach Anspruch 1, **dadurch gekennzeichnet, dass** der Stützabschnitt (11) und der Führungsabschnitt (13) koaxial sind.

4. Vorrichtung nach Anspruch 1, **dadurch gekennzeichnet, dass** die Achse (10) zwischen dem Stützabschnitt (11) und dem Führungsabschnitt (13) eine Kröpfung (12) aufweist, wobei der Stützabschnitt (11) gegenüber dem Führungsabschnitt (13) im Wesentlichen in Richtung zur Darmbremse (15) versetzt ist.

5. Vorrichtung nach Anspruch 3 oder 4, **dadurch gekennzeichnet, dass** in, an oder bei einem die Darmbremse (15) enthaltenden, mit dem Stützabschnitt (11) verbundenen Gehäuse (4) ein Antriebszug (27, 30, 29) vorgesehen ist, dass zumindest der Stützabschnitt (11) der Achse (10) hohl ausgebildet ist, und dass der vom Antriebszug betätigbare Antriebsstrang (A) im Stützabschnitt (11) zum Abdrehkopf (K) verläuft und dort zumindest mit dem in der Füllstellung positionierten Füllrohr (7a, 7b) gekuppelt oder kuppelbar ist, wobei, vorzugsweise, die Darmbremse (15) in dem stationären Gehäuse (4) ebenfalls vom Antriebszug (27, 30, 29) drehantreibbar ist.

6. Vorrichtung nach Anspruch 4, **dadurch gekennzeichnet, dass** der Stützabschnitt (11) und der Führungsabschnitt (13) zueinander parallel sind, und dass der Stützabschnitt (11) gegenüber dem Führungsabschnitt (13) innerhalb der Bewegungsbahnen der Füllrohre (7a, 7b) bei Verdrehen des Abdrehkopfes (K) und um ein Maß (e) versetzt ist, das in etwa 15 % bis 25 % des Außendurchmessers (d) des Abdrehkopfes (K) beträgt.

7. Vorrichtung nach wenigstens einem der vorhergehenden Ansprüche, **dadurch gekennzeichnet, dass** der Antriebsstrang (A) zum Füllrohr (7a, 7b) eine durch Verschieben des Abdrehkopfes (K) trennbare und einrückbare Kupplung (C) aufweist, die im Abdrehkopf (K) oder zwischen dem Abdrehkopf (K) und dem Stützabschnitt (11) angeordnet ist.

8. Vorrichtung nach Anspruch 7, **dadurch gekennzeichnet, dass** der Antriebsstrang (A) eine im Stützabschnitt (11) gelagerte Antriebswelle (24) aufweist, die an der Kröpfung (12) mit einem Austrittsende (24a) aus dem Stützabschnitt (11) austritt und durch Drehen des Abtriebskopfes (K) mit dem Austrittsende (24a) auf wenigstens eine im Abdrehkopf (K) angeordnete, mit wenigstens einem Füllrohr-Drehlager (6a, 6b) im Abdrehkopf (K) verbundene Drehkupplung (9a, 9b), vorzugsweise eine Bogenrillenkupplung, ausrichtbar ist.

9. Vorrichtung nach Anspruch 8, **dadurch gekennzeichnet, dass** das Austrittsende (24a) der Antriebswelle (24) an der Antriebswelle (24) axial verstellbar und in unterschiedlichen Verstellpositionen im Stützabschnitt (11) festlegbar ist, vorzugsweise mittels einer am Stützabschnitt (11) angeordneten, eine Verstellhandhabe (23) aufweisenden Verstellvorrichtung (22).

10. Vorrichtung nach Anspruch 7, **dadurch gekennzeichnet, dass** die Kupplung (C) zwischen dem im Abdrehkopf (K) relativ verschiebbaren Austrittsende (24a) der Antriebswelle (24) und dem jeweiligen, im Abdrehkopf (K) angeordneten Füllrohr-Drehlager (6a, 6b) vorgesehen ist.

11. Vorrichtung nach Anspruch 5, **dadurch gekennzeichnet, dass** der Antriebszug im Gehäuse (4) eine Ausgangswelle (27) aufweist, die über einen Riementrieb (30) mit der Darmbremse (15) und dem Antriebsstrang im Stützabschnitt (11) der Achse (10) gekuppelt oder kuppelbar ist.

12. Vorrichtung nach Anspruch 11, **dadurch gekennzeichnet, dass** das Gehäuse (4) und die Tragkonsole (5) stationär auf einem Unterbau (1) angeordnet sind.

13. Vorrichtung nach Anspruch 1, **dadurch gekennzeichnet, dass** der Abdrehkopf (K) mittels eines Servoantriebs (3a), vorzugsweise über wenigstens eine Schraubspindel (35), achsparallel auf dem Führungsabschnitt (13) verschiebbar ist.

14. Vorrichtung nach Anspruch 13, **dadurch gekennzeichnet, dass** die Schraubspindel (35) versetzt zum Führungsabschnitt (13) zwischen der Tragkonsole (5) und dem Abdrehkopf (K) und mit dem Abdrehkopf (K) um den Führungsabschnitt (13) drehbar angeordnet ist.

15. Vorrichtung nach Anspruch 13, **dadurch gekennzeichnet, dass** die Schraubspindel (35) zentrisch im Führungsabschnitt (13) angeordnet ist.

16. Vorrichtung nach Anspruch 1, **dadurch gekennzeichnet, dass** der Abdrehkopf (K) über eine durch Verschieben des Abdrehkopfes (K) zwischen einer Arbeitsposition und einer Verdrehposition auf dem Führungsabschnitt (13) trennbare und einrückbare, im Abdrehkopf (K) angeordnete, Kupplung (C1) mittels des Antriebsstrangs (A) in der Achse (10) um den Führungsabschnitt (13) verdrehbar ist.

17. Vorrichtung nach Anspruch 1, **dadurch gekennzeichnet, dass** zwischen der Tragkonsole (5) und dem Abdrehkopf (K) ein mit der Zufuhr (19) verbundenes, zur Abdrehkopf-Achse (X) paralleles und in der Tragkonsole (5) verschiebbares Zuführrohr (18) vorgesehen ist, das über eine mit dem Abdrehkopf (K) drehbare Drehdurchführung (34) an das in der Füllstellung positionierte Füllrohr (7a, 7b) oder dessen Füllrohr-Drehlager (6a, 6b) anschließbar ist.

## Claims

1. A device (V) for filling casings, comprising a twist-off head (K) which includes at least two circumferentially offset filling tubes (7a, 7b) and which is connectable to at least one supply means (19) and is arranged to be rotatable about an axis (X) and to be shiftable on a support panel (5), and a stationary casing brake (15) axially aligned with a filling tube (7a, 7b) when located in a filling position, wherein at least the filling tube (7a, 7b) located in the filling position is rotatably drivable in the twist-off head (K), **characterized in that** the casing brake (15) and the support panel (5) are connected via a single rigid shaft (10) comprising a support section (11) extending towards the casing brake (15) and a guide section (13) extending in the twist-off head axis (X) centrally through the twist-off head (K), and that a drive train (A) is arranged in the shaft (10), wherein the shaft (10) forms the only connection between the casing brake (15) and the twist-off head (K).

2. The device according to claim 1, **characterized in that** the drive train (A) in the shaft (10) is drivable either from the side of the casing brake (15) or from the side of the support panel (5) or from both sides.

3. The device according to claim 1, **characterized in that** the support section (11) and the guide section (13) are coaxial.

4. The device according to claim 1, **characterized in that** the shaft (10) comprises a crank (12) between the support section (11) and the guide section (13), the support section (11) being offset relative to the guide section (13) substantially towards the casing brake (15).

5. The device according to claim 3 or 4, **characterized in that** a power train (27, 30, 29) is provided in, on or at a housing (4) which contains the casing brake (15) and is connected to the support section (11), that at least the support section (10) of the shaft (10) is made hollow, and that the drive train (A), which can be operated by the power train, extends in the support section (11) towards the twist-off head (K) and is there coupled or adapted to be coupled at least with the filling tube (7a, 7b) when the latter is located in the filling position, the casing brake being preferably rotatably drivable in the stationary housing (4) also by the power train (27, 30, 29).

6. The device according to claim 4, **characterized in that** the support section (11) and the guide section (13) are in parallel with each other, and that the support section (11) is offset relative to the guide section (13) within the movement paths of the filling tubes (7a, 7b) upon rotation of the twist-off head (K) and by a dimension (e) that is about 15% to 25% the outer diameter (d) of the twist-off head (K).

7. The device according to at least one of the preceding claims, **characterized in that** the drive train (A) leading to the filling tube (7a, 7b) comprises a coupling (C) which can be engaged and disengaged by shifting the twist-off head (K) and which is arranged in the twist-off head (K) or between the twist-off head (K) and the support section (11).

8. The device according to claim 7, **characterized in that** the drive train (A) comprises a drive shaft (24) which is supported in the support section (11) and which at the crank (12) exits with an exit end (24a) out of the support section (11) and which is adapted to be aligned by rotating the twist-off head (K) with the exit end (24a) relative to at least one rotary coupling (9a, 9b), preferably an arc groove coupling, which is arranged in the twist-off head (K) and is connected to at least one filling-tube rotary bearing (6a, 6b) in the twist-off head (K).

9. The device according to claim 8, **characterized in that** the exit end (24a) of the drive shaft (24) is axially adjustable on the drive shaft (24) and fixable in different shift positions in the support section (11), preferably by means of an adjusting device (22) which is arranged on the support section (11) and comprises an adjusting handle (23).

10. The device according to claim 7, **characterized in that** the coupling (C) is provided between the exit end (24a) of the drive shaft (24), which is relatively displaceable in the twist-off head (K), and the respective filling-tube rotary bearing (6a, 6b) arranged in the twist-off head (K).

11. The device according to claim 5, **characterized in that** the power train in the housing (4) comprises an output shaft (27) which is coupled or adapted to be coupled via a belt drive (30) with the both casing brake (15) and the drive train in the support section (11) of the shaft (10).

12. The device according to claim 11, **characterized in that** the housing (4) and the support panel (5) are stationarily arranged on a base (1).

13. The device according to claim 1, **characterized in that** the twist-off head (K) is shiftable by means of a servo drive (3a), preferably via at least one screw spindle (35), in axially parallel fashion on the guide section (13).

14. The device according to claim 13, **characterized in that** the screw spindle (35) is arranged offset relative to the guide section (13) between the support panel (5) and the twist-off head (K) and is rotatable with the twist-off head (K) around the guide section (13).

15. The device according to claim 13, **characterized in that** the screw spindle (35) is centrally arranged in the guide section (13).

16. The device according to claim 1, **characterized in that** the twist-off head (K) is rotatable by means of the drive train (A) in the shaft (10) around the guide section (13) via a coupling (C1) which can be engaged and disengaged by shifting the twist-off head (K) between a work position and a rotary position on the guide section (13) and which is arranged in the twist-off head (K).

17. The device according to claim 1, **characterized in that** a supply tube (18) is provided between the support panel (5) and the twist-off head (K) have which supply tube (18) is connected to the supply means (19) and is in parallel with the twist-off head axis (X) and is shiftable in the support panel (5) and which supply tube (18) via a rotary lead-through (34), which is rotatable with the twist-off head (K), is connectable to the filling tube (7a, 7b) or the filling-tube rotary bearing (6, 6b) thereof when the filling tube (7a, 7b) is located in the filling position.

## Revendications

1. Dispositif (V) destiné au remplissage de boyaux, comprenant une tête de séparation par torsion (K), qui présente au moins deux douilles (7a, 7b) en déport dans la direction périphérique, est raccordable à au moins une arrivée (19), et est disposée avec une possibilité de déplacement et de rotation autour d'un axe (X) sur une console support (5), et un frein de boyaux (15) stationnaire, orienté dans la direction axiale sur un tube de remplissage (7a, 7b) positionné dans une position de remplissage, au moins le tube de remplissage (7a, 7b), positionné dans la position de remplissage, étant entraînable en rotation dans la tête de séparation par torsion (K), **caractérisé en ce que** le frein de boyaux (15) et la console support (5) sont assemblés par l'intermédiaire d'un axe rigide (10), qui présente une section d'appui (11), s'étendant en direction du frein de boyaux (15), et une section de guidage (13), s'étendant de façon centrale dans l'axe (X) de la tête de séparation par torsion au travers de la tête de séparation par torsion (K), et qu'une section d'entraînement (A) est disposée dans l'axe (10), l'axe (10) représentant l'assemblage unique entre le frein de boyaux (15) et la tête de séparation par torsion (K).

2. Dispositif suivant la revendication 1, **caractérisé en ce que** la section d'entraînement (A) est entraînable dans l'axe (10) soit du côté du frein de boyaux (15), soit du côté de la console support (5), soit des deux côtés.

3. Dispositif suivant la revendication 1, **caractérisé en ce que** la section d'appui (11) et la section de guidage (13) sont coaxiales.

4. Dispositif suivant la revendication 1, **caractérisé en ce que** l'axe (10) présente un coude (12) entre la section d'appui (11) et la section de guidage (13), la section d'appui (11) étant en déport par rapport à la section de guidage (13) essentiellement en direction du frein de boyaux (15).

5. Dispositif suivant l'une des revendications 3 et 4, **caractérisé en ce qu'**un câble de commande (27, 30, 29) est prévu dans, sur ou en présence d'un carter (4), qui renferme le frein de boyaux (15) et est assemblé avec la section d'appui (11), qu'au moins la section d'appui (11) de l'axe (10) a une réalisation creuse, et que la section d'entraînement (A), actionnable par le câble de commande, s'étend dans la section d'appui (11) en direction de la tête de séparation par torsion (K) et y est accouplée ou dotée d'une possibilité d'accouplement au moins avec le tube de remplissage (7a, 7b) positionné dans la position de remplissage, le frein de boyaux (15) dans le carter stationnaire (4) étant de préférence également entraînable en rotation par le câble de commande (27, 30, 29).

6. Dispositif suivant la revendication 4, **caractérisé en ce que** la section d'appui (11) et la section de guidage (13) sont parallèles entre elles, et que la section d'appui (11) est en déport par rapport à la section de guidage (13), à l'intérieur des trajectoires de déplacement des tubes de remplissage (7a, 7b), lors de la rotation de la tête de séparation par torsion (K) et d'une cote (e), qui représente environ 15% à 25% du diamètre extérieur (d) de la tête de séparation par torsion (K).

7. Dispositif suivant l'une au moins des revendications précédentes, **caractérisé en ce que** la section d'entraînement (A) présente par rapport au tube de remplissage (7a, 7b) un accouplement (C), qui peut être séparé et embrayé par déplacement de la tête de séparation par torsion (K) et est disposé dans la tête de séparation par torsion (K) ou entre la tête de séparation par torsion (K) et la section d'appui (11).

8. Dispositif suivant la revendication 7, **caractérisé en ce que** la section d'entraînement (A) présente un arbre moteur (24) monté dans la section d'appui (11), lequel arbre sort de la section d'appui (11) sur le coude (12) par une extrémité de sortie (24a) et est orientable par rotation de la tête de séparation par torsion (K), par l'extrémité de sortie (24a), sur au moins un joint tournant (9a, 9b), de préférence un joint rainuré en arc, disposé dans la tête de séparation par torsion (K) et assemblé avec au moins un coussinet de pivotement (6a, 6b) du tube de remplissage dans la tête de séparation par torsion (K).

9. Dispositif suivant la revendication 8, **caractérisé en ce que** l'extrémité de sortie (24a) de l'arbre moteur (24) est ajustable dans la direction axiale sur l'arbre moteur (24) et peut être fixée dans différentes positions de réglage dans la section d'appui (11), de préférence au moyen d'un dispositif de réglage (22) disposé sur la section d'appui (11) et pourvu d'une manette de réglage (23).

10. Dispositif suivant la revendication 7, **caractérisé en ce que** l'accouplement (C) est prévu entre l'extrémité de sortie (24a), mobile par rapport à la tête de séparation par torsion (K), de l'arbre moteur (24) et le coussinet de pivotement respectif (6a, 6b) du tube de remplissage, disposé dans la tête de séparation par torsion (K).

11. Dispositif suivant la revendication 5, **caractérisé en ce que** le câble de commande présente dans le carter (4) un arbre de sortie (27), qui est accouplé ou peut être accouplé, par l'intermédiaire d'une transmission par courroie (30), avec le frein de boyaux (15) et la section d'entraînement dans la section d'appui (11) de l'axe (10).

12. Dispositif suivant la revendication 11, **caractérisé en ce que** le carter (4) et la console support (5) ont une disposition stationnaire sur une infrastructure (1).

13. Dispositif suivant la revendication 1, **caractérisé en ce que** la tête de séparation par torsion (K) est déplaçable au moyen d'une servocommande (3a), de préférence par l'intermédiaire d'au moins une broche filetée (35), de façon parallèle à l'axe sur la section de guidage (13).

14. Dispositif suivant la revendication 13, **caractérisé en ce que** la broche filetée (35) est disposée en déport par rapport à la section de guidage (13) entre la console support (5) et la tête de séparation par torsion (K) et est montée tournante avec la tête de séparation par torsion (K) autour de la section de guidage (13).

15. Dispositif suivant la revendication 13, **caractérisé en ce que** la broche filetée (35) est disposée au centre dans la section de guidage (13).

16. Dispositif suivant la revendication 1, **caractérisé en ce que** la tête de séparation par torsion (K) peut tourner au moyen de la section d'entraînement (A) dans l'axe (10) autour de la section de guidage (13) par l'intermédiaire d'un accouplement (C1), disposé dans la tête de séparation par torsion (K), et qui peut être séparé et embrayé par déplacement de la tête de séparation par torsion (K) entre une position de travail et une position de rotation sur la section de guidage (13).

17. Dispositif suivant la revendication 1, **caractérisé en ce qu'**il est prévu, entre la console support (5) et la tête de séparation par torsion (K), un tube d'alimentation (18) assemblé avec l'arrivée (19), parallèle à l'axe (X) de la tête de séparation par torsion et mobile dans la console support (5), lequel tube est raccordable, par l'intermédiaire d'un passage tournant (34) avec la tête de séparation par torsion (K), au tube de remplissage (7a, 7b) positionné dans la position de remplissage ou au coussinet de pivotement (6a, 6b) du tube de remplissage.
